# EUROPÄISCHE PATENTANMELDUNG

(11) **EP 1 106 536 A1**
(43) Veröffentlichungstag der Anmeldung: **13.06.2001**
(21) Anmeldenummer: 00126170.0
(22) Anmeldetag: 30.11.2000
(51) Int. Cl.: B65F 7/00, A47G 1/17, F16B 47/00

(54) **Halterung mit einer Halteplatte mit rückseitiger Klebebeschichtung**

(30) Priorität: 10.12.1999 DE 29921780 U
(71) Anmelder: MELITTA HAUSHALTSPRODUKTE GmbH & Co. Kommanditgesellschaft, D-32427 Minden (DE)
(72) Erfinder: Graue, Rolf, 32469 Petershagen (DE)
(74) Vertreter: Dantz, Jan Henning

(57) **Zusammenfassung**

Gegenstand der Erfindung ist eine an einem Trägerteil festlegbare, aus Kunststoff gefertigte Halterung (3) mit einer Halteplatte (6) mit rückseitiger Klebebeschichtung und einem vorderseitigen Aufnahmeelement (5).

Erfindungsgemäß ist die Halteplatte (6) mit einer Vielzahl von Schwächungslinien (7) versehen und aufgrund dieser Schwächungslinien (7) an gewölbte oder sphärische Flächen eines Trägerteiles anpaßbar.

Durch die Schwächungslinien (7) kann sich die Halteplatte (6) an gewölbte oder an sphärische Flächen eines Trägerteiles anpassen, so daß die zur Verfügung stehende Klebefläche nahezu vollständig ausgenutzt wird und somit eine stabile Festlegung der Halterung (3) an einem Tragteil erreichbar ist.

## Beschreibung

Die vorliegende Erfindung betrifft eine an einem Trägerteil festlegbare, aus Kunststoff gefertigte Halterung mit einer Halteplatte mit rückseitiger Kleberbeschichtung und einem vorderseitigen Aufnahmeelement, beispielsweise eine Halterung für einen Duftstab zur Anbringung in einer Mülltonne, insbesondere einer Bio-Mülltonne.

Halterungen der gattungsgemäßen Art sind an sich bekannt.

Die bislang verwendeten Halterungen der gattungsgemäßen Art sind mit einer insgesamt starren Halteplatte versehen, so daß die Festlegung bekannter Halterungen an ebenen Flächen eines Trägerteiles problemloserfolgen kann, nicht aber an gewölbten oder sphärischen Flächen eines Trägerteiles. Soll z. B. eine Halterung bekannter Bauart in einer Mülltonne, insbesondere einer Bio-Mülltonne befestigt werden, um dort einen Duftstab aufzunehmen, so stößt dies aufgrund der Tatsache, daß sich an der Innenseite eines Deckels einer Mülltonne praktisch keine ebene Fläche befindet, häufig auf Schwierigkeiten.

Der vorliegenden Erfindung liegt die Aufgabe zugrunde, eine Halterung der gattungsgemäßen Art zu schaffen, die nicht nur auf ebenen Flächen, sondern auch auf gewölbten oder sphärischen Flächen eines Trägerteiles problemlos festklebbar ist.

Diese Aufgabe wird erfindungsgemäß dadurch gelöst, daß die Halteplatte mit einer Vielzahl von Schwächungslinien versehen und aufgrund dieser Schwächungslinien an gewölbte oder sphärische Flächen eines Tragteiles anpaßbar ist.

Die Anbringung von Schwächungslinien im Bereich der Halteplatte erfordert lediglich eine entsprechende Gestaltung des Werkzeuges, in dem eine derartige Halterung gefertigt wird. Damit ist die Herstellung einer erfindungsgemäßen Halterung letztlich nicht teurer als die Herstellung einer herkömmlichen Halterung mit einer starren Halteplatte.

Durch die Schwächungslinien kann sich die Halteplatte weitgehend an gewölbte oder sphärische Flächen eines Trägerteiles anpassen, so daß die zur Verfügung stehende Klebefläche nahezu vollständig ausgenutzt wird und somit eine stabile Festlegung der Halterung an einem Tragteil erreichbar ist.

Selbstverständlich kann eine erfindungsgemäße Halterung ohne Einschränkungen auch in bekannter Weise an einer ebenen Fläche eines Trägerteiles festgelegt werden.

Ist vorzugsweise die Anpassung an eine zylindrisch gewölbte Fläche eines Trägerteiles gewünscht, können alle Schwächungslinien der Halteplatte parallel zueinander verlaufen.

Eine größere Flexibilität wird erreicht, wenn die Schwächungslinien diagonal zu den Eckbereichen der im Grundriß rechteckigen Halteplatte verlaufen. Dadurch wird insbesondere die Anpassung auch an sphärische Flächen eines Trägerteiles möglich.

Um die Anpassung an die unterschiedlichsten Wölbungen eines Trägerteiles weiter zu verbessern, ist nach einem weiteren Ausführungsbeispiel der Erfindung vorgesehen, daß zusätzlich zu den diagonal verlaufenden Schwächungslinien weitere Schwächungslinien vorgesehen sind, die jeweils parallel zu einer der Außenkanten der Halteplatte verlaufen.

Ausführungsbeispiele der Erfindung sind in der beigefügten Zeichnung dargestellt und werden im folgenden näher beschrieben.

Es zeigen:
- Figur 1: eine teilweise im Schnitt dargestellte Seitenansicht einer Mülltonne, an deren Deckel-Innenseite eine erfindungsgemäße Halterung für einen Duftstab befestigt ist,
- Figur 2: eine Draufsicht auf eine erfindungsgemäße Halterung,
- Figur 3: eine Draufsicht auf eine Halterung nach einem weiteren Ausführungsbeispiel der Erfindung,
- Figur 4: ein weiteres Ausführungsbeispiel der Erfindung in einer den Figuren 2 und 3 entsprechenden Draufsicht,
- Figur 5: eine Ansicht in Richtung des Pfeiles V in Figur 3.

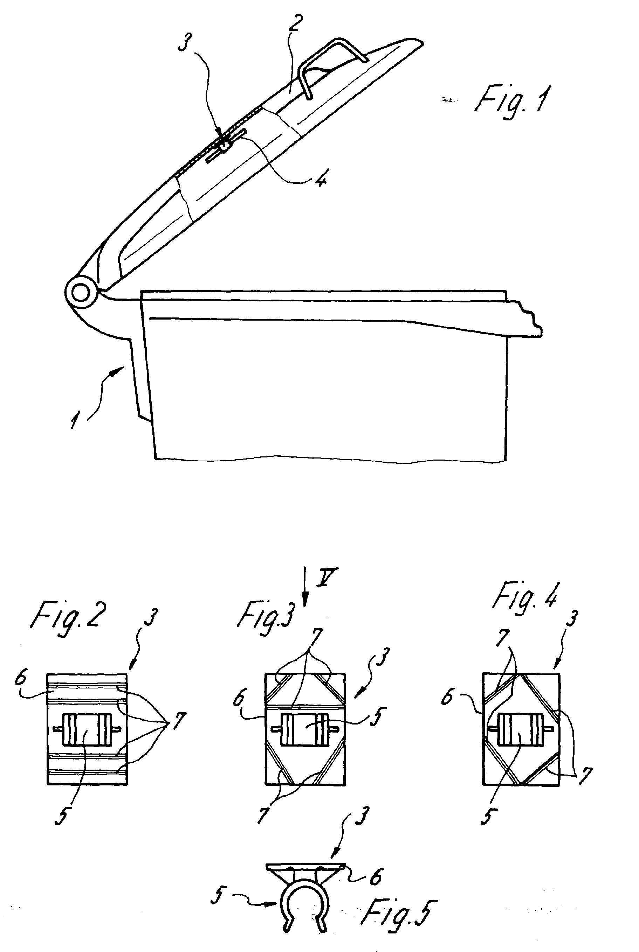

In Figur 1 ist mit dem Bezugszeichen 1 insgesamt eine Mülltonne, vorzugsweise eine Bio-Mülltonne, gezeigt, an deren Deckel 2 innenseitig eine erfindungsgemäße Halterung 3 befestigt ist, die einen Duftstab 4 aufnimmt.

Die Halterung 3 ist insgesamt einstückig aus Kunststoff gefertigt und umfaßt - wie die Ausführungsbeispiele nach den Figuren 2-5 zeigen - im wesentlichen eine Halteplatte 6, die rückseitig in an sich bekannter Weise mit einer Kleberbeschichtung und vorderseitig mit einem Aufnahmeelement 5 versehen ist.

Dabei kann das Aufnahmeelement 5, wie in den Figuren 2-5 dargestellt, die Form einer Federklammer aufweisen, selbstverständlich kann aber auch ein hakenartiges oder druckknopfartiges Aufnahmeelement 5 vorgesehen sein, je nach dem beabsichtigten Verwendungszweck für die erfindungsgemäße Halterung 3.

Die Gestaltung des Aufnahmeelementes 5 - wie in den Zeichnungen dargestellt - dient speziell zur Einklemmung eines im Querschnitt kreisförmigen Duftstabes 4.

Um zu ermöglichen, die Halteplatte 6 auch an gewölbte oder sphärische Flächen eines Tragteiles (beispielsweise des Deckels 2 einer Mülltonne 1) weitgehend vollflächig anlegen zu können, ist gemäß vorliegender Erfindung die Halteplatte einer erfindungsgemäßen Halterung 3 mit Schwächungslinien 7 ausgestattet.

Längs dieser Schwächungslinien 7 ist eine Verformung der Halteplatte 6 und damit eine Anpassung an verschieden geformte Flächen eines Trägerteiles möglich.

Beim Ausführungsbeispiel gemäß Figur 2 verlaufen alle Schwächungslinien 7 parallel zueinander. Eine derartige Gestaltung ermöglicht ein optimales Anpassen der Halteplatte 6 beispielsweise an zylindrisch gewölbte Flächen eines Trägerteiles.

Die in den Figuren 3-5 gezeigten Ausführungsbeispiele sind mit Schwächungslinien 7 versehen, die diagonal zu den Eckbereichen der im Grundriß im übrigen rechtekkigen Halteplatte 6 verlaufen. Dabei ist im Ausführungsbeispiel gemäß Figur 3 zusätzlich noch mindestens eine Schwächungslinie 7 vorgesehen, die parallel zu einer Außenkante des Trägerteiles 4 verläuft.

Derartig gestaltete Halterungen 3 können mit ihrer Halteplatte 6 auch weitgehend optimal an sphärisch gewölbte Flächen eines Trägerteiles angepaßt und somit sicher daran festgeklebt werden.

## Patentansprüche

1. An einem Trägerteil festlegbare, aus Kunststoff gefertigte Halterung mit einer Halteplatte mit rückseitiger Kleberbeschichtung und einem vorderseitigen Aufnahmeelement, beispielsweise einer Halterung für einen Duftstab zur Anbringung in einer Mülltonne, insbesondere einer Bio-Mülltonne, **dadurch gekennzeichnet,** daß die Halteplatte (6) mit einer Vielzahl von Schwächungslinien (7) versehen und aufgrund dieser Schwächungslinien (7) an gewölbte oder sphärische Flächen eines Trägerteiles anpaßbar ist.

2. Halterung nach Anspruch 1, **dadurch gekennzeichnet,** daß alle Schwächungslinien (7) parallel zueinander verlaufen.

3. Halterung nach Anspruch 1, **dadurch gekennzeichnet,** daß die Schwächungslinien (7) diagonal zu den Eckbereichen der im Grundriß rechteckigen Halteplatte (6) verlaufen.

4. Halterung nach Anspruch 3, **dadurch gekennzeichnet,** daß zusätzlich zu den diagonal verlaufenden Schwächungslinien (7) weitere Schwächungslinien (7) vorgesehen sind, die jeweils parallel zu einer der Außenkanten der Halteplatte (6) verlaufen.

5. Halterung nach einem oder mehreren der vorhergehenden Ansprüche, **dadurch gekennzeichnet,** daß das Aufnahmeelement (5) die Form einer Federklammer aufweist.

6. Halterung nach einem oder mehreren der vorhergehenden Ansprüche 1-4, **dadurch gekennzeichnet,** daß das Aufnahmeelement (5) die Form eines Hakens aufweist.

7. Halterung nach einem oder mehreren der vorhergehenden Ansprüche 1-4, **dadurch gekennzeichnet,** daß das Aufnahmeelement (5) druckknopfartig ausgebildet ist
